# EUROPEAN PATENT APPLICATION

(11) **EP 3 187 695 A1**
(43) Date of publication of application: **05.07.2017**
(21) Application number: 16206187.3
(22) Date of filing: 22.12.2016
(51) Int. Cl.: F01D 11/18, F01D 21/04, F01D 25/26

(54) **A WRAP COMPRISING SHEETS OF GRAPHENE FOR A CASING OF A ROTATING MEMBER, CORRESPONDING TURBOFAN ENGINE AND METHOD OF ASSSAEMBLING A TURBOFAN ENGINE**

(30) Priority: 30.12.2015 US 201514983790
(71) Applicant: General Electric Company, Schenectady, NY 12345 (US)
(72) Inventor: GUIJARRO VALENCIA, Antonio, 85748 Garching bei München (DE)
(74) Representative: Williams, Andrew Richard

(57) **Abstract**

A wrap (50) configured to cover a surface (44) of a casing (35) surrounding a rotating member includes one or more graphene sheets (52,54;58,60,62,64,66,68,70,72,74,76,78) and a matrix (88) configured to stabilize the one or more graphene sheets (52,54;58,60,62,64,66,68,70,72,74,76,78). The matrix (88) further configured to receive an adhesive (56) or mechanical fastener (97) and to bond to a surface (44) of the casing (35) using the adhesive (56) or mechanical fastener (97). The wrap (50) is further configured to facilitate heat transfer over the casing (35), to structurally reinforce the casing (35), and to enhance containment resilience. Corresponding turbofan engine and method of assembling a turbofan engine are also provided.

## Description

### BACKGROUND

This invention relates generally to turbofan engines, and more particularly, to methods and apparatus for operating turbofan engines.

Turbofan engines typically include high and low pressure compressors, a combustor, and at least one turbine. The compressors compress air which is mixed with fuel and channeled to the combustor. The mixture is then ignited for generating hot combustion gases, and the combustion gases are channeled to the turbine which extracts energy from the combustion gases for powering the compressor, as well as producing useful work to propel an aircraft in flight or to power a load, such as an electrical generator.

When turbofan engines operate in various conditions, foreign objects may be ingested into the engines. More specifically, various types of foreign objects may be entrained in the inlet of a turbofan engine, ranging from large birds, such as sea gulls, to hailstones, sand and rain. The foreign objects may impact a blade resulting in a portion of the impacted blade being torn loose from a rotor. Such a condition, known as foreign object damage, may cause the rotor blade to pierce an engine casing resulting in cracks along an exterior surface of the engine casing, and possible injury to nearby personnel. Additionally, the foreign object damage may cause a portion of the engine to bulge or deflect resulting in increased stresses along the entire engine casing.

To facilitate preventing the increased engine stresses and the possible injury to personnel, at least some known engines include a metallic casing shell to facilitate increasing a radial and an axial stiffness of the engine, and to facilitate reducing stresses near the engine casing penetration. However, casing shells are typically fabricated from a metallic material which results in an increased weight of the engine and therefore the airframe.

In addition, thermal conduction and the resulting localized thermal expansion and contraction of elements of the engine casing induce local thermal stresses that may deform the engine casing, thereby degrading engine performance. For example, local thermal stresses may deform a compressor casing out of round, impacting compressor clearance and further hampering the ability to control compressor clearance. Existing casing reinforcement materials, such as Kevlar, are insulating, and further exacerbate the local thermal stresses within the engine casing.

### BRIEF DESCRIPTION

In one aspect, a wrap configured to cover a surface of a casing surrounding a rotating member includes one or more graphene sheets and a matrix configured to stabilize said one or more graphene sheets. The matrix is further configured to receive an adhesive or mechanical fastener. The matrix is further configured to bond to a surface of the casing using the adhesive or mechanical fastener. The wrap is further configured to facilitate heat transfer over the casing, to structurally reinforce the casing, and to enhance containment resilience.

In another aspect, a method of assembling a turbofan engine with a casing surrounding a rotating member includes providing one or more graphene sheets. The graphene sheets contain graphene and a matrix configured to stabilize the graphene. The method also includes bonding the matrix of the one or more graphene sheets to a surface of the casing using an adhesive or using mechanical fasteners inserted through a plurality of connecting rings formed within the matrix and into the surface of the casing to form a wrap. The wrap includes the one or more graphene sheets and the matrix. The wrap is configured to facilitate heat transfer over the casing, to structurally reinforce the casing, and to enhance containment resilience.

In an additional aspect, a turbofan engine includes a core engine comprising a rotating member surrounded by a casing and a wrap covering at least a portion of a surface of the casing. The wrap includes one or more graphene sheets, and a matrix configured to stabilize the one or more graphene sheets. The matrix is further configured to receive an adhesive and bond to the surface of the casing using the adhesive. The wrap is further configured to facilitate heat transfer over the casing, to structurally reinforce the casing, and to enhance containment resilience.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIGS. 1-4 show example embodiments of the wrap and method described herein.
FIG. 1 is schematic illustration of a turbofan engine.
FIG. 2 is a cross-sectional view of an engine casing with an attached wrap;
FIG. 3 is a close-up view of the wrap of FIG. 2 bonded to the surface of the engine casing; and
FIG. 4 is top view of a graphene sheet.

Although specific features of various embodiments may be shown in some drawings and not in others, this is for convenience only. Any feature of any drawing may be referenced and/or claimed in combination with any feature of any other drawing.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The following detailed description illustrates embodiments of the disclosure by way of example and not by way of limitation. It is contemplated that the disclosure has general application to a wrap and a method of using the wrap to facilitate heat transfer over a casing of a turbofan engine and to structurally reinforce the casing. Although various embodiments of the wrap and method of using the wrap are described in terms of this exemplary embodiment, it is to be understood that the wrap and method are suitable for facilitating heat transfer and structurally reinforcing a body as defined herein without limitation.

In various embodiments, a wrap comprising one or more graphene sheets is bonded to a casing of a turbofan engine, thereby enhancing heat transfer over the casing and providing structural reinforcement to the casing. The graphene within the graphene sheets is an advanced material known for being about 200 times stiffer than steel and for conducting heat 10 times faster than copper, as well as for light weight. Wrapping the casing with graphene enhances the containment characteristics of the casing in the event of an intake of a foreign object into the turbofan engine and/or a blade failure. In addition, the graphene casing wrap facilitates uniform heat conduction around the casing allowing for better tip clearance control. The high strength of graphene enables a reduction of the thickness relative to existing designs that make use of materials such as Kevlar, and an associated reduction in weight of the turbofan engine.

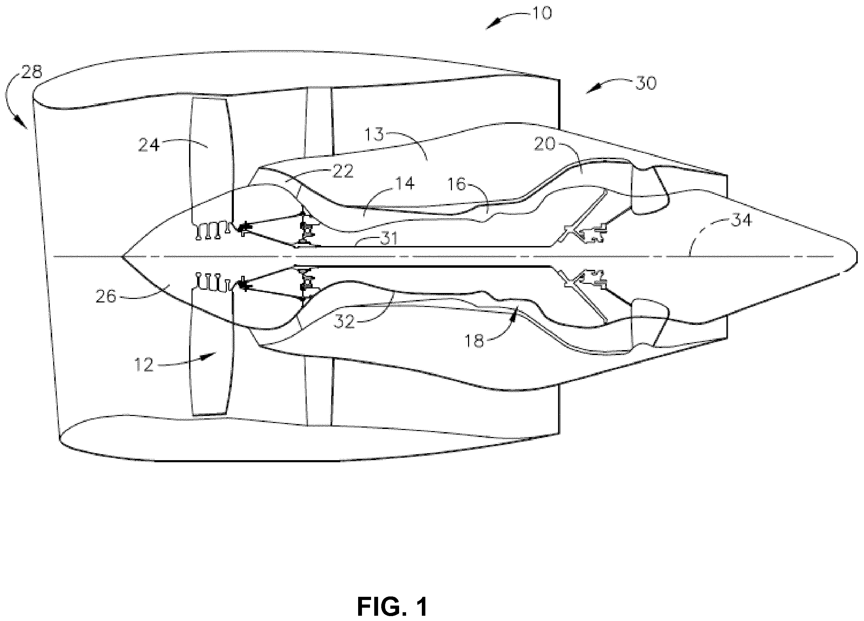

FIG. 1 is a schematic illustration of a turbo fan engine 10 that includes a fan assembly 12 and a core engine 13 including a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 28 and an exhaust side 30. Fan assembly 12 and turbine 20 are coupled by a first rotor shaft 31, and compressor 14 and turbine 18 are coupled by a second rotor shaft 32.

During operation, air flows through fan assembly 12, along a central axis 34, and compressed air is supplied to high pressure compressor 14. The highly compressed air is delivered to combustor 16. Airflow (not shown in Figure 1) from combustor 16 drives turbines 18 and 20, and turbine 20 drives fan assembly 12 by way of shaft 31.

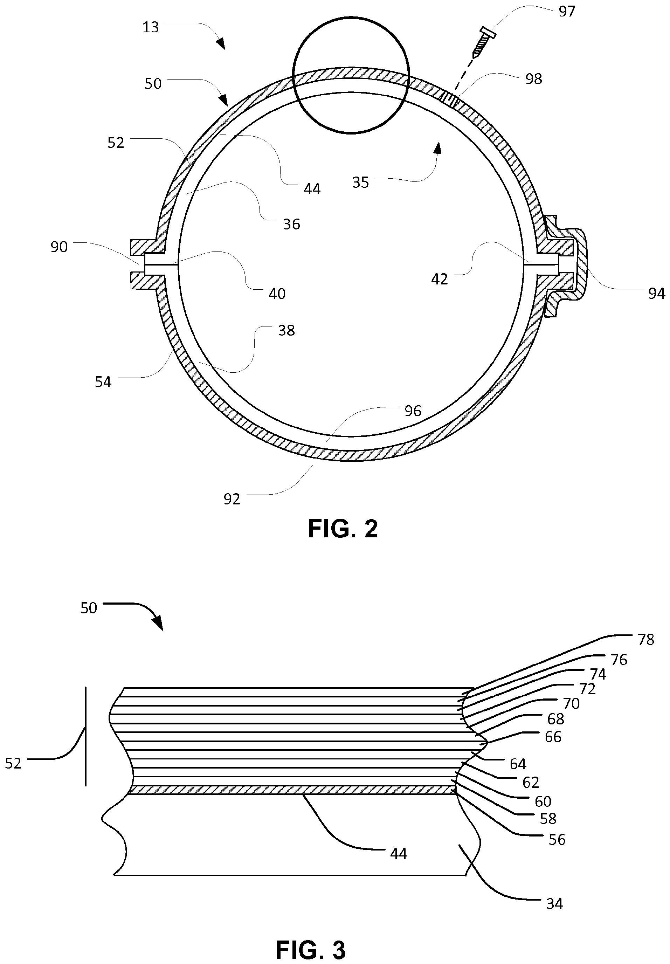

FIG. 2 is a cross-sectional view of a casing 35 from a portion of core engine 13 and an exemplary wrap 50. In the exemplary embodiment, wrap 50 includes one or more graphene sheets 52, 54 that are bonded to a surface 44 of casing 35. In various embodiments, one or more graphene sheets may be bonded to casing 35 in separate locations on casing 35. In the exemplary embodiment, first graphene sheet 52 is bonded to surface 44 of a first casing element 36 and second graphene sheet 54 is bonded to surface 44 of second casing element 38. In various aspects, any number of graphene sheets may be bonded to casing 35 without limitation. The use of one or more graphene sheets 52, 54 enables a closer fit of wrap 50 over surface 44 of casing 35, and further enables wrap 50 to conform to various projections and/or other irregularities of surface 44.

In this exemplary embodiment, wrap 50 further includes a gap 90 between abutted graphene sheets 52, 54. In various aspects, gap 90 may be included in wrap 50 to enable easy access to certain components of casing 35. By way of non-limiting example, gap 90 may be situated over a joint 40 between elements 36, 38 of casing 35 to facilitate maintenance of casing 35. In various other embodiments, gap 90 may be included in wrap 50 to accommodate deformation of casing 35 due to thermal stresses experienced during operation of turbofan engine 10. In these embodiments, gap 90 may be sized to accommodate the expected range of deformation due to thermal stresses. In other embodiments, gap 90 may be sized to control heat transfer by defining a discontinuity in thermally conductive graphene sheets 52, 54 of wrap 50.

In various embodiments, wrap 50 is bonded to at least a portion of surface 44 of casing 35. In some embodiments, wrap 50 is bonded to a region of surface 44 to ameliorate deformation due to thermal stresses. By way of non-limiting example, wrap 50 is bonded to surface 44 of casing 35 in segments of high pressure compressor 14. In this example, wrap 50 enables enhanced thermal transfer from casing 35, thereby facilitating control of compressor clearance by reducing thermal expansion and/or contraction during operation of turbofan engine 10. By way of another non-limiting example, wrap 50 is bonded to surface 44 of casing 35 in segments of fan assembly 12. In this example, wrap 50 may be bonded to surface 44 of casing 35 in regions corresponding to a prime containment zone (not illustrated), corresponding to a zone that extends both axially and circumferentially around fan assembly 12 and represents an area wherein a fan blade (not shown) is most likely to be radially flung or ejected from fan assembly 12 in the event of a blade failure.

FIG. 3 is an enlargement of first casing element 36 with one or more graphene sheets 52 bonded to surface 44 in an exemplary embodiment. In this exemplary embodiment, one or more graphene sheets 52 may include at least 10 individual graphene sheets 58, 60, 62, 64, 66, 68, 70, 72, 74, 76, 78 arranged as layers as illustrated in FIG. 3. One or more graphene sheets 52 are bonded to surface 44 of first casing element 36 with an adhesive layer 56 between innermost graphene sheet 58 and surface 44 of first casing element 36.

In various embodiments, wrap 50 includes at least 10 graphene sheets arranged in layers. In various other embodiments, wrap 50 includes at least 20 graphene sheets, at least 30 graphene sheets, at least 40 graphene sheets, at least 50 graphene sheets, at least 60 graphene sheets, at least 70 graphene sheets, at least 80 graphene sheets, at least 90 graphene sheets, or at least 100 graphene sheets, arranged in layers. In another embodiment, wrap 50 includes a plurality of graphene sheets ranging from about 10 to about 100 graphene sheets arranged in layers. In these embodiments, the number of graphene sheets arranged in layers may be selected to enable a desired level of structural reinforcement and/or to enable a desired enhancement in heat conduction for casing 35.

Referring again to FIG. 2, wrap 50 may further include one or more additional graphene sheets 92 at a selected region 96 of casing 35 in one embodiment. In this embodiment, one or more additional graphene sheets 92 are configured to control heat transfer at selected region 96. Region 96 is selected based on a determination of a hot spot in casing 35.

In another embodiment, wrap 50 further includes one or more flexible graphene sheets 94 situated over one or more protrusions 42 projecting from surface 44 of casing 35. One or more flexible graphene sheets 94 may be situated over local regions that contain protrusions 42 to accommodate protrusions 42 and enable a close fit and bonding of wrap 50 to casing 35. By way of non-limiting example, one or more flexible graphene sheets 94 are situated over protrusion 42 associated with a joint 40 of casing elements 36, 38.

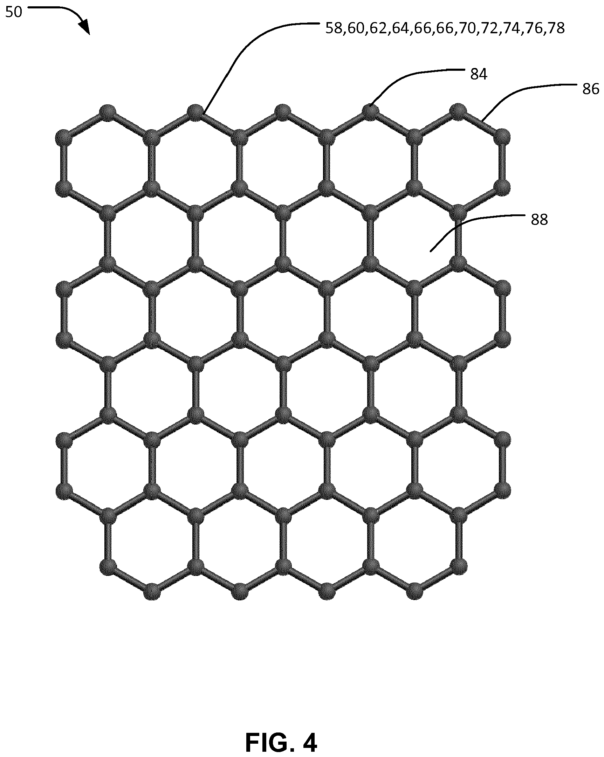

FIG. 4 is a top close-up view of individual graphene sheet 58, 60, 62, 64, 66, 68, 70, 72, 74, 76, 78. Each individual graphene sheet 58, 60, 62, 64, 66, 68, 70, 72, 74, 76, 78 comprises a plurality of carbon atoms 84 in a single layer joined by covalent bonds 86 and arranged in a plurality of fused hexagonal rings in a sheet that is one atom thick. Each individual graphene sheet 58, 60, 62, 64, 66, 68, 70, 72, 74, 76, 78 further includes a matrix 88 configured to stabilize the graphene within graphene sheet 58, 60, 62, 64, 66, 68, 70, 72, 74, 76, 78. Any suitable matrix material may be used without limitation including, but not limited to a metallic matrix.

In one embodiment, wrap 50 is bonded to surface 44 of casing 35 using adhesive 56. Any suitable adhesive 56 may be used to bond wrap 50 to surface 44 without limitation. Non-limiting examples of suitable adhesives include high temperature epoxy resins capable of withstanding temperatures of up to about 650° F, representative of ambient temperatures during engine operation. In one embodiment, wrap 50 may be bonded to surface 44 at innermost graphene sheet 58. In another embodiment, matrix 88 is configured to receive adhesive 56 to facilitate bonding of wrap 50 to surface 44. In an additional embodiment, individual graphene sheets 58, 60, 62, 64, 66, 68, 70, 72, 74, 76, 78 may be bonded to one another using adhesive (not illustrated) between adjacent graphene sheets 58, 60, 62, 64, 66, 68, 70, 72, 74, 76, 78. In this embodiment, the bonding of graphene sheets 58, 60, 62, 64, 66, 68, 70, 72, 74, 76, 78 may enhance the thermal conductivity and structural integrity of wrap 50.

In one embodiment, wrap 50 is bonded to surface 44 of casing 35 using a plurality of mechanical fasteners 97. In this embodiment, each mechanical fastener 97 is inserted through a connecting ring 98 formed within matrix 88 of wrap 50. Any suitable fastener 97 may be used to bond wrap 50 to surface 44 including, but not limited to, screws, rivets, staples, and any other suitable mechanical fastener 97 without limitation. Wrap 50 is provided with a plurality of connecting rings 98 formed within matrix 88 to receive plurality of fasteners 97 to enhance the bonding of wrap 50 to surface 44 of casing 35. In another embodiment, individual graphene sheets 58, 60, 62, 64, 66, 68, 70, 72, 74, 76, 78 may be bonded to one another using adhesive (not illustrated) between adjacent graphene sheets 58, 60, 62, 64, 66, 68, 70, 72, 74, 76, 78 as described herein previously, and wrap 50 is bonded to surface 44 of casing 35 using plurality of mechanical fasteners 97. In another embodiment, both adhesive 56 and plurality of mechanical fasteners 97 are used to bond wrap 50 to surface 44 of casing 35.

In one embodiment, a turbofan engine 10 may incorporate wrap 50 to enhance heat conduction and structural integrity of casing 35. In this embodiment, wrap 50 covers surface 44 of casing 35 surrounding rotating member (not illustrated) of core engine 13. Wrap 50 comprises at least one graphene sheet 52, 54 and matrix 88 bonded to surface 44 of casing 35 using adhesive 56, as described herein previously.

Exemplary embodiments of wrap, methods of using a wrap to facilitate the heat conduction and structural integrity of a casing of a turbofan engine are described above in detail. The wrap, and methods of using such wrap are not limited to the specific embodiments described herein, but rather, components of systems and/or steps of the methods may be utilized independently and separately from other components and/or steps described herein.

For example, the methods may also be used in combination with other systems requiring selective heat transfer and/or structural reinforcement, and are not limited to practice with only the systems and methods as described herein. Rather, the exemplary embodiment can be implemented and utilized in connection with many other machinery applications that are currently configured to receive and accept heat transfer and structural reinforcement elements.

Example methods and apparatus for facilitating heat transfer and enhancing structural integrity of a casing of a turbofan engine are described above in detail. The apparatus illustrated is not limited to the specific embodiments described herein, but rather, components of each may be utilized independently and separately from other components described herein. Each system component can also be used in combination with other system components.

This written description uses examples to describe the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A wrap for a casing surrounding a rotating member, said wrap comprising:
   one or more graphene sheets; and
   a matrix configured receive an adhesive or mechanical fastener, stabilize said one or more graphene sheets, and bond to a surface of the casing using said adhesive or mechanical fastener; and
   said wrap further configured to cover at least a portion of a surface of the casing, facilitate heat transfer over the casing, structurally reinforce the casing, and enhance containment resilience.
2. The wrap of Clause [0001] 1, wherein said one or more graphene sheets comprise bonded carbon atoms in sheet form approximately one atom thick.
3. The wrap of any preceding Clause, wherein said one or more graphene sheets comprise at least 10 graphene sheets.
4. The wrap of any preceding Clause, wherein said one or more graphene sheets comprise from about 10 graphene sheets to about 100 graphene sheets.
5. The wrap of any preceding Clause, wherein said wrap further comprises a gap between abutted sheets, said gap sized to accommodate a deformation of the casing.
6. The wrap of any preceding Clause, wherein said wrap further comprises one or more additional graphene sheets configured to control heat transfer at a selected region of the casing, said one or more additional graphene sheets situated at the region, and the region selected based on a determination of a hot spot in the casing.
7. The wrap of any preceding Clause, wherein said wrap further comprises one or more flexible graphene sheets situated over one or more protrusions projecting from the casing.
8. A method of assembling a turbofan engine comprising a casing surrounding a rotating member, the method comprising:
   providing one or more graphene sheets comprising graphene and a matrix configured to stabilize the graphene; and
   bonding the matrix of the one or more graphene sheets to a surface of the casing using an adhesive or using mechanical fasteners inserted through a plurality of connecting rings formed within the matrix and into the surface of the casing to form a wrap;
   the wrap comprising the one or more graphene sheets and the matrix; and
   the wrap configured to facilitate heat transfer over the casing, to structurally reinforce the casing, to enhance containment resilience, and to enhance containment resilience.
9. The method of any preceding Clause, wherein the one or more graphene sheets comprise bonded carbon atoms in sheet form approximately one atom thick.
10. The method of any preceding Clause, wherein the one or more graphene sheets comprises at least 10 graphene sheets.
11. The method of any preceding Clause, wherein the one or more graphene sheets comprises from about 10 graphene sheets to about 100 graphene sheets.
12. The method of any preceding Clause, further comprising forming a gap between abutted sheets of the one or more graphene sheets, the gap sized to accommodate a deformation of the casing.
13. The method of any preceding Clause, further comprising bonding one or more additional graphene sheets configured to control heat transfer at a region of the casing, the region selected based on a determination of a hot spot in the casing.
14. The method of any preceding Clause, further comprising bonding one or more flexible graphene sheets over one or more protrusions projecting from the casing.
15. A turbofan engine comprising:
   a core engine comprising a rotating member surrounded by a casing; and
   a wrap covering at least a portion of a surface of the casing, said wrap comprising:
      one or more graphene sheets; and
      a matrix configured to stabilize said one or more graphene sheets, said matrix further configured to receive an adhesive and bond to the surface of the casing using said adhesive, wherein said wrap is further configured to facilitate heat transfer over the casing and to structurally reinforce the casing.
16. The turbofan engine of any preceding Clause, wherein said one or more graphene sheets comprise bonded carbon atoms in sheet form approximately one atom thick.
17. The turbofan engine of any preceding Clause, wherein said one or more graphene sheets comprise at least 10 graphene sheets.
18. The turbofan engine of any preceding Clause, wherein said wrap further comprises a gap between abutted sheets, said gap sized to accommodate a deformation of the casing.
19. The turbofan engine of any preceding Clause, wherein said wrap further comprises one or more additional graphene sheets configured to control heat transfer at a region of the casing, said one or more additional graphene sheets situated at the region, and the region selected based on a determination of a hot spot in the casing.
20. The turbofan engine of any preceding Clause, wherein said wrap further comprises one or more flexible graphene sheets situated over one or more protrusions projecting from the casing.

## Claims

1. A wrap (50) for a casing (35) surrounding a rotating member, said wrap (50) comprising:
one or more graphene sheets (52,54;58,60,62,64,66,68,70,72,74,76,78); and
a matrix (88) configured receive an adhesive (56) or mechanical fastener (97), stabilize said one or more graphene sheets (52,54;58,60,62,64,66,68,70,72,74,76,78), and bond to a surface (44) of the casing (35) using said adhesive (56) or mechanical fastener (97); and
said wrap (50) further configured to cover at least a portion of a surface (44) of the casing (35), facilitate heat transfer over the casing (35), and structurally reinforce the casing (35), and enhance containment resilience.

2. The wrap (50) of Claim 1, wherein said one or more graphene sheets (52,54;58,60,62,64,66,68,70,72,74,76,78) comprise bonded carbon atoms (84) in sheet form approximately one atom thick.

3. The wrap (50) of either of Claim 1 or 2, wherein said one or more graphene sheets (52,54;58,60,62,64,66,68,70,72,74,76,78) comprise at least 10 graphene sheets.

4. The wrap (50) of any preceding Claim, wherein said one or more graphene sheets (52,54;58,60,62,64,66,68,70,72,74,76,78) comprise from about 10 graphene sheets to about 100 graphene sheets.

5. The wrap (50) of any preceding Claim, wherein said wrap (50) further comprises a gap (90) between abutted sheets (52,54), said gap (90) sized to accommodate a deformation of the casing (35).

6. The wrap (50) of any preceding Claim, wherein said wrap (50) further comprises one or more additional graphene sheets (92) configured to control heat transfer at a selected region (96) of the casing (35), said one or more additional graphene sheets (92) situated at the region (96), and the region (96) selected based on a determination of a hot spot in the casing (35).

7. The wrap (50) of any preceding Claim, wherein said wrap (50) further comprises one or more flexible graphene sheets (94) situated over one or more protrusions (42) projecting from the casing (35).

8. A method of assembling a turbofan engine (10) comprising a casing (35) surrounding a rotating member, the method comprising:
providing one or more graphene sheets (52,54;58,60,62,64,66,68,70,72,74,76,78) comprising graphene and a matrix (88) configured to stabilize the graphene; and
bonding the matrix (88) of the one or more graphene sheets (52,54;58,60,62,64,66,68,70,72,74,76,78) to a surface (44) of the casing (35) using an adhesive (56) or using mechanical fasteners (97) inserted through a plurality of connecting rings (98) formed within the matrix (88) and into the surface (44) of the casing (35) to form a wrap (50);
the wrap (50) comprising the one or more graphene sheets (52,54;58,60,62,64,66,68,70,72,74,76,78) and the matrix (88); and
the wrap (50) configured to facilitate heat transfer over the casing (35), to structurally reinforce the casing (35), and to enhance containment resilience.

9. The method of Claim 8, wherein the one or more graphene sheets (52,54;58,60,62,64,66,68,70,72,74,76,78) comprise bonded carbon atoms (84) in sheet form approximately one atom thick.

10. The method of either of Claim 8 or 9, wherein the one or more graphene sheets (52,54;58,60,62,64,66,68,70,72,74,76,78) comprises at least 10 graphene sheets.

11. The method of any of Claims 8 to 10, wherein the one or more graphene sheets (52,54;58,60,62,64,66,68,70,72,74,76,78) comprises from about 10 graphene sheets to about 100 graphene sheets.

12. The method of any of Claims 8 to 11, further comprising forming a gap (90) between abutted sheets (52,54) of the one or more graphene sheets (52,54;58,60,62,64,66,68,70,72,74,76,78), the gap (90) sized to accommodate a deformation of the casing (35).

13. The method of any of Claims 8 to 12, further comprising bonding one or more additional graphene sheets (92) configured to control heat transfer at a region (96) of the casing (35), the region (96) selected based on a determination of a hot spot in the casing (35).

14. The method of any of Claims 8 to 13, further comprising bonding one or more flexible graphene sheets (52,54;58,60,62,64,66,68,70,72,74,76,78) over one or more protrusions (42) projecting from the casing (35).

15. A turbofan engine (10) comprising:
a core engine (13) comprising a rotating member surrounded by a casing (35); and
a wrap (50) covering at least a portion of a surface (44) of the casing (35), said wrap (50) comprising:
one or more graphene sheets (52,54;58,60,62,64,66,68,70,72,74,76,78); and
a matrix (88) configured to stabilize said one or more graphene sheets (52,54;58,60,62,64,66,68,70,72,74,76,78), said matrix (88) further configured to receive an adhesive (56) and bond to the surface (44) of the casing (35) using said adhesive (56), wherein said wrap (50) is further configured to facilitate heat transfer over the casing (35), to structurally reinforce the casing (35), and to enhance containment resilience.
